# EUROPEAN PATENT SPECIFICATION

(11) **EP 2 523 106 B1**
(45) Date of publication and mention of the grant of the patent: **30.12.2015**
(21) Application number: 12158641.6
(22) Date of filing: 08.03.2012
(51) Int. Cl.: G06F 12/02, G06F 9/445, H04L 29/08

(54) **Upgrading of application processors**
Aktualisierung von Anwendungsprozessoren
Mise à jour des processeurs d'application

(30) Priority: 11.05.2011 IN DE13842011
(43) Date of publication of application: 14.11.2012
(73) Proprietor: ALCATEL LUCENT, 92100 Boulogne-Billancourt (FR)
(72) Inventor: Thomas Edison, Nadar, 400614 MUMBAI (IN)
(74) Representative: Sciaux, Edmond

(56) References cited:
- WO-A1-2007/148899
- WO-A2-99/31955
- US-A1- 2002 078 307
- US-A1- 2009 007 135

## Description

### FIELD OF INVENTION

The present subject matter relates to communication networks and, particularly but not exclusively, to upgrading of an application software on application processors while maintaining data synchronization between the application processors.

### BACKGROUND

A typical telecommunication system includes one or more application processors for handling communication services, such as management of network resources and management of data traffic. Each application processor executes instances of one or more application software. Such application software may facilitate the telecommunication system in managing the communication services in a communication network.

With the ever-evolving technology, upgraded versions of an application software are continually introduced. Such upgraded versions are installed on the application processors to either provide new features and functionalities to the telecommunication system, or update the present application software for enhancing performance of the telecommunication system in handling the communication services. Typically, the installation and activation of upgraded versions of the application software on the application processors may be performed either by software upgrade or by software retrofitting.

During software upgrade, a first application processor, i.e., a processor running stand-by or backup processes is upgraded with a new version of the application software, while a second application processor, i.e., a processor running active processes, continues to provide communication services. After the first application processor gets upgraded with the new version of the application software, data synchronization is performed between the two application processors by copying the data from the second application processor onto the memory of the upgraded first application processor. In order to achieve data synchronization between the two application processors, structural format and size of the data being copied is left unchanged between the two versions of the application software.

If the software upgrade requires changes in the structural format or size of the data being synchronized, software retrofitting is performed on each of the application processors. Such conventional schemes of retrofitting application processors with an upgraded application software may generally involve: interrupting communication services handled by the telecommunication system by taking all the application processors offline, albeit for a small interval, and then simultaneously retrofitting all the application processors.

Documents US 2009/007135 discloses a method according to the preamble of claim 1.

### SUMMARY

This summary is provided to introduce concepts related to upgrading of an application software on a plurality of application processors while maintaining data synchronization between the application processors. This summary is not intended to identify essential features of the claimed subject matter nor is it intended for use in determining or limiting the scope of the claimed subject matter.

In an embodiment as claimed in claim 1, a method includes upgrading an application software on an application processor group, selected from the plurality of application processor groups, to obtain an upgraded application processor group. Further, at least one data segment on the upgraded application processor group is compared with a corresponding data segment on another application processor group not yet upgraded to determine whether the data segment on the upgraded application processor group has been modified in response to the upgrading. Based on the comparing, at least one modified data region in the modified data segment on the upgraded application processor group is identified. Further, session data relating to active sessions handled by the another application processor group is preserved from a data region on the another application processor group to a temporary memory space within the upgraded application processor group. The data region on the another application processor group corresponds to the modified data region on the upgraded application processor group. Furthermore, the session data is copied from the temporary memory space to a pre-defined memory space within the upgraded application processor group, wherein the pre-defined memory space is allocated to the modified data region.

In accordance with another embodiment of the present subject matter, a device for upgrading the application software on the application processors, while maintaining data synchronization is disclosed according to features of claim 10.

In accordance with another embodiment of the present subject matter, a computer readable medium according to claim 16 is disclosed.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 schematically illustrates a telecommunication system implementing an upgrading device for upgrading an application software on a plurality of application processors in a communication network environment while maintaining data synchronization between the application processors, in accordance with an embodiment of the present subject matter;
Figure 2(a) illustrates exemplary components of the upgrading device, in accordance with an embodiment of the present subject matter;
Figure 2(b) illustrates session data in a second application processor group, which is running on an older version of the application software, in accordance with an embodiment of the present subject matter;
Figure 2(c) illustrates synchronized session data in an upgraded first application processor group, in accordance with an embodiment of the present subject matter; and
Figure 3 illustrates a method for upgrading of the application software on the application processors while maintaining data synchronization, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Devices and methods for upgrading of application processors while maintaining data synchronization between the application processors are described herein. In the context of the present subject matter, the upgrading of application processors may be understood as upgrading of an application software on the application processors.

A typical telecommunication system may implement a communication network to allow communication between various terminal devices, for example, mobile phones and pagers. The communication network, generally, includes various network entities for performing one or more functions for establishing communication between the terminal devices. For example, a Global System for Mobile Communication (GSM) network includes a base station subsystem having one or more base station controllers (BSCs) and a switching subsystem having one or more mobile switching centers (MSCs). In another example, a Universal Mobile Telecommunications System (UMTS) network includes a radio access network (RAN) having one or more radio network controllers (RNCs).

The network entities may include a plurality of application processors, which facilitate handling of variety of communication services, such as voice calls, data calls, and short message service (SMS), and data related to such communication services. The application processors in the communication network allow execution of a number of instances of an application software. Such application software may facilitate the network entities to manage the communication services in the communication network.

To introduce new functionalities or to supplement the features and functionalities of the telecommunication system, upgraded versions of application software are developed, and installed periodically. The network entities, such as the BSCs, the RNCs, and the MSCs, can either be upgraded to or retrofitted with the latest version of the application software to enhance the operation of or implement additional functionalities within the telecommunication system.

Generally, retrofitting of the application processors handling communication services over the communication network can be achieved by taking all the application processors offline. An application processor is said to be offline when active connections between the application processor and other application processors within a processor cluster or the active connections between the application processor and the network entities or terminal devices or both, such as mobile phones and pagers, are terminated. At this stage, the application processor is operationally de-activated. Taking the application processors offline, however, is associated with a finite service downtime. After taking the application processors offline, the application processors are retrofitted to a new version of the application software. The downtime for software retrofitting though not avoidable, is not desirable either.

Alternatively, software upgrade may be performed that involves dividing the application processors into a first group of application processors that are in stand-by configuration and a second group of application processors that are in active configuration. Subsequently, the first application processor group is taken offline and upgraded with the intended application software or updated version of the application software, while the second group of processors continues to provide service with a current version of the application software. Further, the first group of application processors initializes itself, allocates memory for internal data, and establishes external communication links. Subsequently, the first group of application processors takes a copy of session data from the second group of application processors and stores the session data in its memory. The session data can be utilized to provide the same service when the first group of processors gets promoted to an active mode. When the first group of application processors, now running on the new version of the application software, is ready to handle the communication services, the first group of applications processor is brought online, switched to active mode, and subsequently, the second group of application processors is taken offline for software upgrade. It will be understood that an application processor group is said to be in active mode or online when it is actively connected to other application processor groups and to the various network entities and/or terminal devices, and its functionalities are resumed.

When both the groups of application processors are upgraded, the telecommunication system is said to be upgraded to the new version of application software. To achieve this type of phased software upgrade, the session data when copied from second group of application processors to the first group of application processors should ideally remain unchanged, in terms or structural format or size of the session data, between two versions of the application software. If the structural format changes, say due to introduction of an additional functionality in the new version of the application software, copying the session data from the second group of applications processors to the first group of applications processors may result in data corruption.

To this end, embodiments of the present subject matter describe methods and devices for upgrading of the application software on the application processors while maintaining data synchronization between the application processors. In an embodiment, the application processors are included within a network entity in the telecommunication system to handle communication services of the telecommunication system. As indicated previously, examples of such a network entity, includes but are not limited to a BSC, an MSC, and an RNC.

Systems and methods described herein can be implemented in any of the communication networks, such as Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), and IP-based network, Public Switched Telephone Network (PSTN), Long Term Evolution (LTE) network, and Integrated Services Digital Network (ISDN). Although the description herein is with reference to certain networks, the systems and methods may be implemented in other networks, albeit with a few variations, as will be understood by a person skilled in the art.

In one implementation, the application processors may be sequentially upgraded to a new version of the application software. Examples of the application software may include, but are not limited to, an application for implementing any additional functionality, a new version or release of the application software, patches, and updates for a presently hosted application software. Further, the application software can be understood to be one application software or a plurality of application software or modules implementing various functionalities.

In one implementation, the upgrading of the application software on the application processors includes dividing the plurality of the application processors into one or more application processor groups, for example a first application processor group and a second application processor group. The division of the applications processors into the plurality of application processor groups can be based on various schemes. In one implementation, the application processors can be divided into a plurality of application processor groups based on configurations of the application processors. For example, the second application processor group may include active application processors, while the first application processor group may include standby application processors. An active application processor can be understood as an application processor actively participating in communication based operations within the communication network, such as call processing, and resource allocation. A standby application processor, on the other hand, can be understood as an application processor configured to be in a ready-to-run state for handling the communication services of the communication network. In one implementation, the standby application processor can be provided as a back-up processor to assume the processing responsibility of the active application processor in the event of failure of the active application processor.

In one implementation, the first application processor group is upgraded with a new version of the application software. Before initializing and setting the status of the first application processor group to online, it is determined whether session data is synchronized between the second application processor groups and the upgraded first application processor group. In one example, the session data relates to active sessions that were being handled by the second application processor group before the application software upgrade. The session data is generally arranged in one or more data segments. Each data segment may further comprise one or more data regions.

According to an implementation, each data segment on the second application processor group is compared with a corresponding data segment on the upgraded first application processor group. Based on the comparison, it is determined whether structural format of at least one data segment or a data region on the second application processor group therein is different from the structural format of a corresponding data segment or data region on the upgraded first application processor group. In one example, the structural format of the data segment on the upgraded first application processor group may be different to support new functionalities in the application software upgrade. It will be understood that a change in the structural format of the data segment translates into a difference in size of the data segment or the data region, as the case may be.

If it is determined that the structural format of the data segments or the data regions on the second application processor group is not different from the structural format of a corresponding data segment or data region on the upgraded first application processor group, the session data is copied from each of the data segment in the second application processor group onto the first application processor group.

However, if it is determined that the structural format of at least one data segment on the second application processor group is different from the structural format of a corresponding data segment on the upgraded first application processor group, the data segments on both the application processor groups are further analyzed. The data segments on the upgraded first application processor group, which are identified to be different from the corresponding data segment on the second application processor group are hereinafter referred to as modified data segments. As mentioned before, each of the modified data segments may have data regions and at least one data region, from amongst the data regions, may be different in structural format when compared to a corresponding data region on the second application processor group. For example, extra fields may get added in the data regions on the upgraded first application processor group to accommodate additional functionalities as part of the application software upgrade. Such data regions on the upgraded first application processor group are hereinafter referred to as modified data regions, whereas those data regions which are not different from the corresponding data regions on the second application processor group are hereinafter referred to as un-modified data regions.

Therefore, in one implementation, the modified data regions and the un-modified data regions in the modified data segments are identified. Subsequently, the session data from the data regions on the second application processor group corresponding to the un-modified data regions on the upgraded first application processor group is copied onto a corresponding pre-defined memory space allocated within the upgraded first application processor group. On the other hand, the session data from the data regions on the second application processor corresponding to the modified data regions on the upgraded first application processor group is copied onto a temporary memory space allocated within the upgraded first application processor group. Subsequently, the session data from the temporary memory space is copied to a corresponding pre-defined memory space allocated within the upgraded first application processor group. In order to preserve the sanity of the session data of the second application processor group and to preserve the structural format of the data region on the upgraded first application processor group, such copying may be performed either field by field or block by block. In this manner, the structural format of data region on the second application processor group is converted into a format understood by a corresponding data region on the upgraded first application group, thus providing data synchronization. In addition to the data synchronization, in an embodiment, the control of the second application processor group may be switched to the upgraded first application processor group.

Once the control of the processes, associated with the communication network, is switched to the upgraded first application processor group, the second application processor group is taken offline and upgraded with the application software in the manner as described above. According to an implementation, in the meanwhile, the upgraded first application processor group can then be activated for handling the communication services that were previously being handled by the second application processor group.

In this manner, the present subject matter provides an exemplary method and system to upgrade a plurality of application processors in a communication network. Further, it is ensured that the session data is synchronized between the application processors while application software upgrade particularly in cases where the data regions undergo format changes from one version to another. Such data synchronization occurs without data corruption. Conventionally, additional functionalities may not be delivered via software upgrade and hence, retrofitting is typically used; however, the present subject matter facilitates addition of new functionalities through software upgrade.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof

It will also be appreciated by those skilled in the art that the words, such as during, while, and when, as used herein, are not exact terms that mean an action takes place instantly upon an initiating action but that there may be some small but reasonable delay, such as a propagation delay, between the initial action and the reaction that is initiated by the initial action. Additionally, the word "connected" is used throughout for clarity of the description and can include either a direct connection or an indirect connection.

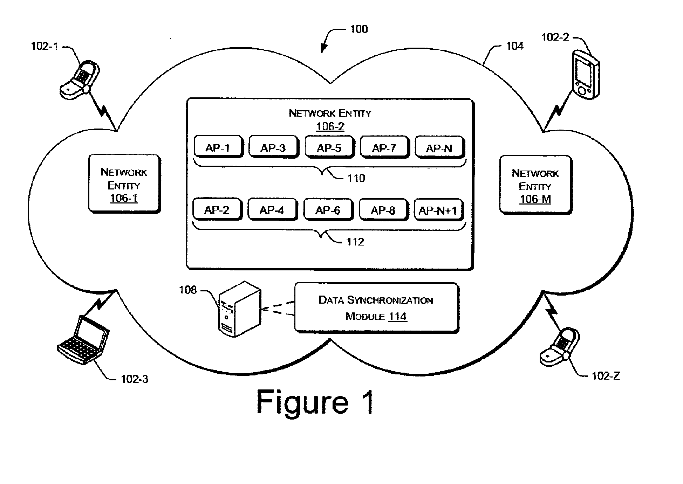

Figure 1 illustrates a telecommunication system 100 for upgrading a plurality of application processors in a communication network environment while maintaining data synchronization between the application processors, according to an embodiment of the present subject matter. In the context of the present subject matter, the upgrading of application processors may be understood as upgrading of an application software on the application processors. In said embodiment, the telecommunication system 100 includes one or more communication devices 102-1, 102-2, 102-3,... ....,102-Z (collectively referred to as communication devices 102) communicating with each other through a communication network 104. The communication devices 102 may include, without limitation, desktop computers, handheld devices, laptops or other portable computers, network computers, mobile phones, landline phones, and the like. Each of the communication devices 102 communicate with each other based on communication protocols implemented by the communication network 104.

The communication network 104 may be a wireless or a wired network, or a combination thereof The communication network 104 can be a collection of individual networks that are interconnected with each other and function as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), IP-based network, Public Switched Telephone Network (PSTN), Long Term Evolution (LTE) network, and Integrated Services Digital Network (ISDN).

Depending on the technology, the communication network 104 includes various network entities 106-1, 106-2,....106-M, collectively referred to as network entities 106 and individually referred to as a network entity 106. In one example, where the communication network 104 is a GSM network, the network entities 106 include one or more mobile switching centers (MSCs) and base station controllers (BSCs). In another example, where the communication network 104 is a UMTS network, the network entities 106 include one or more radio network controllers (RNCs).

Each of the network entities 106, such as the network entity 106-2 as illustrated in Figure 1, includes a plurality of application processors AP-1, AP-2,...AP-N+1, where N may either be an odd or an even integer. The plurality of application processors may be arranged in the form of one or more processor clusters. Further, the plurality of application processors execute one or more application software to provide communication related services, such as signaling, data traffic processing, and call processing, to end users of the communication devices 102. The application software may also be implemented to provide one or more functionalities to the communication network 104.

As indicated previously, to enhance the functionalities of the telecommunication system 100 and to provide additional features, the application processors are upgraded with programs associated with the application software running on the application processors. Examples of the programs may include, but are not limited to, applications for implementing any additional functionality, a new version or release of the application software, patches, hot-fixes, and updates. Further, the programs can be understood to be one application software or a plurality of application software or modules implementing various functionalities. For the purpose of explanation, such programs associated with application software are also referred to as application software, hereinafter.

The communication network 104 includes an upgrading device 108. In one implementation, each network entity 106 is provided with a dedicated upgrading device 108 (not shown in the figure). In another implementation, as shown in the figure, the upgrading device 108 can be communicatively connected to all the network entities 106 within the communication network 104.

In one implementation, the upgrading device 108 initiates the upgrading of the application processors by dividing the application processors into a plurality of application processor groups. It will be understood that the division of the application processors includes a logical division of the application processors into the application processor groups. In one implementation, the upgrading device 108 divides the application processors into two processor groups, say, a first application processor group 110 and a second application processor group 112. For example, the upgrading device 108 may divide the application processors in a manner such that the even numbered application processors, i.e., application processors AP-2, AP-4... AP-N+1, are categorized as the first application processor group 110, and the odd numbered application processors, i.e., application processors AP-1, AP-5,...AP-N, are categorized as the second application processor group 112.

In another embodiment, the upgrading device 108 divides the application processors into the application processor groups based on numerical identifiers associated with the application processors or the configuration of the application processors, or a combination thereof For example, in case the application processors in the communication network 104 are implemented as a plurality of mated sets, each of the mated sets may have at least one application processor in standby configuration and at least one application processor in active configuration. For explanation, the application processors in standby configuration are referred to as standby application processors, whereas those in active configuration are referred to as active application processors.

An active application processor can be understood as an application processor actively participating in communication based operations within the communication network 104, such as call processing and resource allocation. A standby application processor, on the other hand, can be understood as an application processor configured to be in a ready-to-run state for handling the communication services of the communication network 104. In one implementation, the standby application processor can be provided as a back-up processor to assume the processing responsibility of the active application processor in the event of failure of the active application processor. Such an implementation provides redundancy, fault tolerance, and reliability to the telecommunication system 100.

Thus, in one implementation, the upgrading device 108 may divide the applications processors into a first application processor group 110 having standby application processors of the mated sets, and a second application processor group 112 having active application processors of the mated sets or vice versa. The present example has been discussed assuming that each of the mated sets within the processor cluster includes one active and one standby application processor.

Subsequent to the division of the application processors into the application processor groups, the upgrading device 108 commences the installation of the application software on one of the application processor group, for example, the first application processor group 110 having standby application processors. The first application processor group having the application software installed thereon is also referred to as upgraded first application processor group and the installation of application software is hereinafter referred to as application software upgrade. It will be understood that at this point, the upgraded first application processor group 110 having standby application processor groups and the second application processor group 112 having active application processor groups are running on two different versions of the application software.

To ensure that the upgraded first application processor group 110 can be brought to the ready-to-run state, session data is transferred from the second application processor group 112 to the upgraded first application processor group 110. In one example, the session data relates to active sessions that were being handled by the second application processor group 112 during the application software upgrade on the first application processor group 110. The session data is generally arranged in one or more data segments. Each data segment may further comprise one or more data regions.

In one implementation, a data synchronization module 114, within the upgrading device 108, compares each data segment on the second application processor group 112 with a corresponding data segment on the upgraded first application processor group 110 to determine whether structural format of the at least one data segment on the upgraded first application processor group 110 or a data region therein has changed after the application software upgrade. In one example, the structural format of a data segment on the upgraded first application processor group 110 may change to support new functionalities in the application software upgrade. Additionally, a change in the structural format of a data segment translates into a difference in size of the data segment or the data region, as the case may be.

If the data synchronization module 114 determines that the structural format of any data segment has not changed, the session data is directly copied from each of the data segment within the second application processor group 112 onto the upgraded first application processor group 110. It will be understood that in the aforementioned scenario, size of the data segments on the upgraded first application processor group 110 are in synchronization with the data segments on the second application processor group 112.

However, if the data synchronization module 114 determines that the structural format of at least one data segment on the second application processor group 112 is different from the structural format of a corresponding data segment on the upgraded first application processor group 110, the data segments on both the application processor groups are further analyzed. The data segments on the upgraded first application processor group 110, which are identified as different from the corresponding data segment on the second application processor group 112, are hereinafter referred to as modified data segments. As mentioned before, each of the modified data segments may have data regions and at least one data region, from amongst the data regions, may be different in structural format when compared to a corresponding data region on the second application processor group 112. For example, extra fields may get added in the data regions on the upgraded first application processor group 110 to accommodate additional functionalities as part of the application software upgrade. Such data regions on the upgraded first application processor group 110 are hereinafter referred to as modified data regions, whereas those data regions which are not different from the corresponding data regions on the second application processor group 112 are hereinafter referred to as un-modified data regions.

Therefore, in one implementation, the data synchronization module 114 identifies the modified data regions and the un-modified data regions in the modified data segments. Subsequently, the data synchronization module 114 copies the session data from the data regions on the second application processor group 112 corresponding to the un-modified data regions on the upgraded first application processor group 110 onto a pre-defined memory space allocated within the upgraded first application processor group 110.

On the other hand, the data synchronization module 114 copies the session data from the data regions on the second application processor group 112, corresponding to the modified data regions, to a temporary memory space allocated within the upgraded first application processor group 110. Subsequently, the data synchronization module 114 translates and copies the session data from the temporary memory space to a corresponding pre-defined memory space allocated within the upgraded first application processor group 110. Such copying may be performed either, field by field or block by block. In this manner, the structural format of a data region on the second application processor group 112 is converted into a format understood by a corresponding modified data region on the upgraded first application group 110. This is further illustrated in detail in the forthcoming description.

In addition to the data synchronization, in an embodiment, the data synchronization module 114 may also switch control of the second application processor group 112 to the upgraded first application processor group 110. It will be understood that the switching of control between two application processor groups 110 and 112 may include switching the control of the processes from one application processor group onto the other.

Once the control of the processes, associated with the communication network 104, is switched to the upgraded first application processor group 110, another application processor group, for example, the second application processor group 112 is taken offline and upgraded with the application software in the manner as described above. In the meanwhile, the upgraded first application processor group 110 can be activated for handling the communication services that were previously being handled by the second application processor group 112.

It would be appreciated that in a similar manner, other application processor groups can be upgraded, where the session data of the other application processor groups can be directly preserved and synchronized on one or more upgraded application processor groups, without determining whether the structural format of data regions has changed or not. This is because the upgraded application processor groups, such as the upgraded first application processor group 110, already have the session data in a structural format which is in synchronization with the new version of the application software.

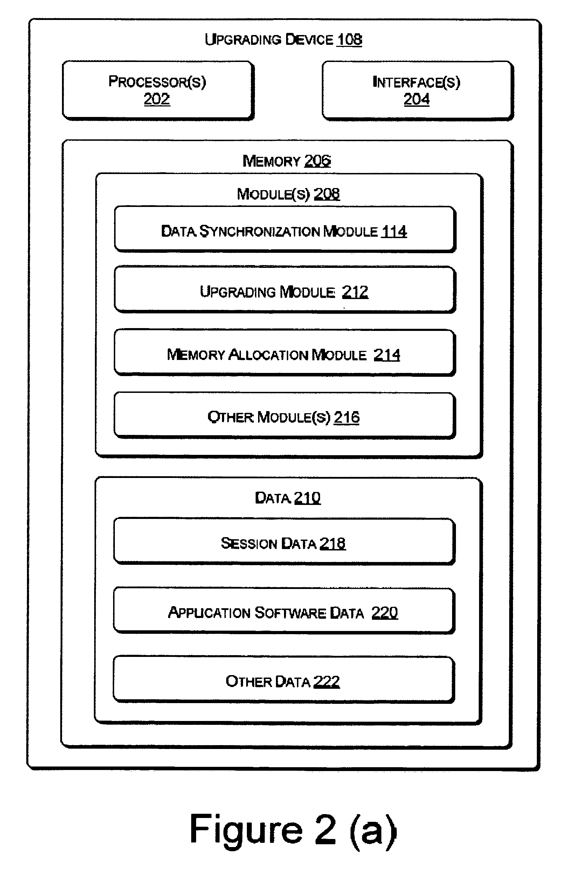

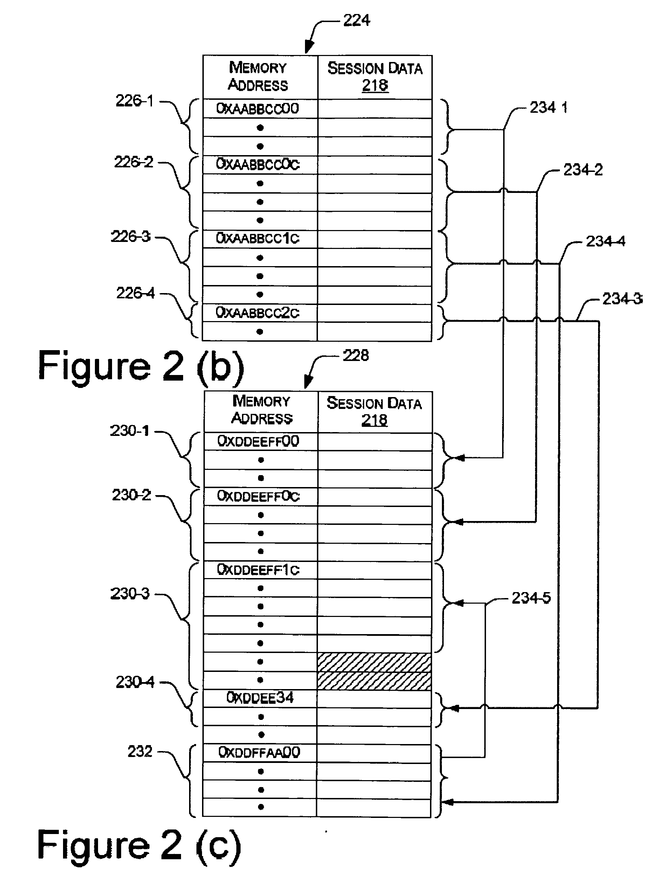

Figure 2(a) illustrates exemplary components of the upgrading device 108 for upgrading of the application processors with the application software while maintaining data synchronization, according to an implementation of the present subject matter. To better clarify aspects of the present subject matter, Figure 2(a) has been explained in conjunction with Figures 2(b) and 2(c), where Figure 2(b) illustrates session data in a second application processor group, which is running on an older version of the application software; while Figure 2(c) illustrates synchronized session data in an upgraded first application processor group, which is running on a new version of the application software, as per one implementation of the present subject matter.

In said implementation, the upgrading device 108 includes one or more processor(s) 202, interface(s) 204, and a memory 206 coupled to the processor 202. The processor 202 can be a single processing unit or a number of units, all of which could also include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 206.

The interface(s) 204 may include a variety of software and hardware interfaces, for example, interface for peripheral device(s), such as a keyboard, a mouse, an external memory, and a printer. Further, the interfaces 204 may enable the upgrading device 108 to communicate with other computing devices, such as the other upgrading devices (not shown) in the communication network 104.

The memory 206 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 also includes module(s) 208 and data 210.

The module(s) 208 include routines, programs, objects, components, data structures, etc., which perform particular tasks or implement particular abstract data types. The module(s) 208 further includes the data synchronization module 114, an upgrading module 212, a memory allocation module 214, and other module(s) 216. The other module(s) 216 may include programs or coded instructions that supplement applications and functions of the upgrading device 108.

On the other hand, the data 210, amongst other things, serves as a repository for storing data processed, received, and generated by one or more of the module(s) 208. The data 210 includes, for example, session data 218, application software data 220, and other data 222. The other data 222 includes data generated as a result of the execution of one or more modules in the other module(s) 216.

As mentioned earlier, to upgrade a plurality of application processors arranged in the form of say a processor cluster, the upgrading module 212 divides the processor cluster into a plurality of application processor groups, for example, the first application processor group 110 and the second application processor group 112. In one implementation, the upgrading module 212 in the upgrading device 108 may divide the processor cluster into the plurality of application processor groups based on pre-defined rules. For example, the upgrading module 212 may divide the processor cluster into a plurality of application processor groups based on the numerical identifiers associated with each application processor in the processor cluster or the configurations of the application processors, or a combination thereof. In said example, the configurations of the application processors include active configuration and standby configuration.

Once the division is achieved, in an embodiment, the upgrading module 212 further installs the application software on one of the application processor groups from the plurality of application processor groups. As mentioned before, the application software may include, but is not limited to, application software for implementing any additional functionality, a new version or release of the application software, patches, and updates. In an embodiment of the present subject matter, the application software is stored in the application software data 220 in the upgrading device 108. In one example, the upgrading module 212 commences with the installation of the application software on the first application processor group 110. The rules for the commencement of upgrading may also be pre-defined and included in the application software data 220.

Thus, the first application processor group 110 is upgraded with the application software and may interchangeably be referred as the upgraded first application processor group 110 hereinafter. As part of the application software upgrade, the memory allocation module 214 allocates a pre-defined memory space within the first application processor group 110 for taking a back-up of the session data 218 from the second application processor group 112. The session data 218 includes, for example, active call session data and active packet exchange session data, which have to be transferred onto the first application processor group 110 so that the first application processor group 110 can serve the communication devices 102 when the second application processor group 112 is brought offline. It will be understood that even though the session data 218 is shown to be saved temporarily on the upgrading device 108; the session data 218 may also be directly mapped from the second application processor group 112 to the upgraded first application processor group 110 without saving the session data 218 in the upgrading device 108.

It should be noted that the pre-defined memory space allocated for the session data 218 in the upgraded first application processor group 110 is in conformance with the application software installed on the upgraded first application processor group 110. However, due to addition of functionalities during the application software upgrade, the pre-defined memory space in the upgraded first application processor group 110 may not be similar (in size and format) to the memory space in which the session data 218 is currently located. As a result, if the session data 218 is copied directly from the second application processor group 112 to the pre-defined memory space on the upgraded first application processor group 110, as done conventionally, the session data 218 may get corrupted.

Thus, in one implementation, the data synchronization module 114 first identifies whether one or more data segments on the upgraded first application processor group 110, in which the session data 218 is arranged, have been modified. The modification, in one example, may be in terms of the structural format of the data segment or any data region therein. In one implementation, the data synchronization module 114 compares each of the data segments on the second application processor group 112 with a corresponding data segment on the upgraded first application processor group 110 to determine whether or not the data segments on the upgraded first application processor group 110 have been modified. The correspondence between the data regions on the application processor groups 110 and 112 may be defined during the application software upgrade on the upgraded first application processor group 110.

Thus, the data synchronization module 114 identifies one or more data segments on the upgraded first application processor group 110 that are not different (in terms of structural format) when compared to the corresponding data segments on the second application processor group 112. The session data within such data segments is copied directly from the second application processor group 112 to a corresponding pre-defined memory space allocated within the upgraded first application processor group 110.

However, the data segments on the upgraded first application processor group 110 that have been modified with respect to the corresponding data regions on the second application processor group 112, hereinafter referred to as modified data segments, are further analyzed by the data synchronization module 114 to identify one or more data regions within the modified data segments that have been modified. In one implementation, the data synchronization module 114 stores information pertaining to such modified data segments and modified data regions, such as address of the modified data segments and regions, size of the modified data segments and regions, etc., which have changed in terms of structural format in the other data 222. The information, such as data region ID of the un-modified data regions may also be stored in the other data 222.

Further, the data synchronization module 114 copies the session data 218 from the data regions on the second application processor group 112 corresponding to the un-modified data regions on the upgraded first application processor group 110 onto a corresponding pre-defined memory space allocated within the upgraded first application processor group 110. Additionally, the data synchronization module 114 copies the session data 218 from the data regions on the second application processor group 112 corresponding to the modified data regions on upgraded first application processor group 110 onto a corresponding temporary memory space in the upgraded first application processor group 110.

In one implementation, the memory allocation module 214 allocates the temporary memory space on the upgraded first application processor group 110 corresponding to each of the modified data regions. Further, the structural format of the temporary memory space on the upgraded first application processor group 110 is in synchronization with the format of the data region on the second application processor group 112 corresponding to the modified data region, thus allowing the session data 218 to be copied directly from the modified data region on the second application processor group 112 to the temporary memory space on the upgraded first application processor group 110.

Subsequently, in one implementation, the data synchronization module 114 copies the session data 218 from the temporary memory space to the corresponding pre-defined memory space. It will be appreciated that the pre-defined memory space corresponds to the modified data region on the upgraded first application processor group 110. For ensuring data synchronization, such copying may be performed either field-by-field or block-by-block based on various parameters, for example, number of processor cycles. After the session data 218 of the modified data region is copied to the corresponding predefined memory space from the temporary memory space, the temporary memory space is released.

This may be further understood with the help of the following example. In said example, it is assumed that a single data segment exists on the second application processor group 112 (which has to be backed-up on the upgraded first application processor group 110). It is further assumed that structural format of said data segment has changed after the application software upgrade on the upgraded first application processor group 110. The example provided herein has been provided for understanding of the present subject matter and should not be construed as limiting.

Figure 2(b) shows a data segment 224 on the second application processor group 112. The data segment 224 includes the session data 218, which is copied on the upgraded first application processor group 110 to enable the upgraded first application processor group 110 to serve the communication devices 102 after the second application processor group 112 is taken offline. In said example, the session data 218 in the data segment 224 is further distributed amongst one or more data regions 226, namely, data regions 226-1, 226-2, 226-3, and 226-4. A first part of the session data 218 is stored in the data region 226-1 starting from memory location 0xaabbcc00. A second part of the session data 218 is stored in the data region 226-2 starting from memory location 0xaabbcc0c, a third part of the session data 218 is stored in the data region 226-3 starting from memory location 0xaabbcc1c, and a remaining part of the session data 218 is stored in the data region 226-4 starting from memory location 0xaabbcc2c.

Fig. 2(c) shows a data segment 228 on the upgraded first application processor group 110. The data segment 228 includes one or more data regions 230, viz., a data region 230-1, 230-2, 230-3, and 230-4. In said example, the memory allocation module 214 has allocated pre-defined memory space to the data segment 228 on the upgraded first application processor group 110. For example, the data region 230-1 starts from 0xdd22ff00, the data region 230-2 starts from 0xdd22ff0c, the data region 230-3 starts from 0xdd22ff1c, and the data region 230-4 starts from 0xddee34. Typically, the session data 218 is directly copied from each of the data regions 226 in the data segment 224 onto the corresponding data regions 230 in the data segment 228. For example, the third part of the session data 218 in the data region 226-3 is copied to the corresponding pre-defined memory space allocated for the data region 230-3, and so on. However, as shown, the data segment 228 has a different data structure than the data segment 224, and may therefore be referred to as the modified data segment 228. Specifically, the data region 230-3 has an extended region as shown in the hashed box. The extended region is a result of newly added functionalities in the application software to which the applications processors are being upgraded. Thus, the size of the modified data region 230-3 is greater than its corresponding data region 226-3. If the session data 218 is directly copied from the data region 226-3 onto its corresponding modified data region 230-3, data corruption may occur.

Therefore, in one implementation, the memory allocation module 214 allocates a temporary memory space 232 starting from 0xddffaa00 for the third part of the session data 218 in the data region 226-3. The temporary memory space 232 is in tune with the memory allocated to the data region 226-3 in the data segment 224.

In one implementation of data synchronization, the data synchronization module 114 directly copies the first part of the session data 218 from the data region 226-1 to the data region 230-1 (as shown by curve 234-1). Similarly, the second part of the session data 218 is directly copied from the data region 226-2 to the data region 230-2 (as shown by curve 234-2), and the remaining part of the session data 218 is directly copied from the data region 226-4 to the data region 230-4 (as shown by curve 234-3). The third part of the session data 218, however, is first copied from the data region 226-3, which is located on the second application processor group 112, to the temporary memory space 232 (as shown by curve 234-4) on the upgraded first application processor group 110. Once the session data 218 has been copied from the second application processor group 112 to the upgraded first application processor group 110, the upgrading module 212 copies the third part of the session data 218, either block by block or field by field, to the corresponding pre-defined memory space on the upgraded first application processor group 110 for the modified data region 230-3, i.e., the memory location starting from 0xdd22ff1c (as shown by curve 234-5).

In an embodiment, after the structural format of the modified data region, i.e., the data region 226-3, is converted into a format understood by the upgraded first application processor group 110, the temporary memory space 232 is released into a free pool.

Subsequently, the upgrading module 212 initializes the application software on the upgraded first application processor group 110. As mentioned earlier, the initialization of the application software brings the application software into a ready-to-run state on the upgraded first application processor group 110. In such a state, the application software is capable of providing and handling communication services as soon as the upgraded first application processor group 110 is activated and the application software is executed. Once the application software is initialized, the upgraded first application processor group 110 may resume implementing the one or more functionalities related to the communication network 104.

Further, the data synchronization module 114 switches the control of another application processor group, such as the second application processor group 112, to the upgraded first application processor group 110. With the switching of control to the upgraded first application processor group 110, the application processors in the upgraded first application processor group 110 are made operational, by running the updated version of the application software thereon.

In addition, with the session data 218 of the second application processor group 112 preserved on the upgraded first application processor group 110, the application software on the upgraded first application processor group 110 begins handling one or more services handled by the second application processor group 112. The second application processor group 112, on the other hand, is brought offline upon switching control to the upgraded first application processor group 110, and is upgraded with the application software in the same manner as described above. However, for the upgraded second application processor group 112, the data synchronization may be rather straight forward as the session data 218 on the upgraded first application processor group 110 is already in a format that is understood by the recently upgraded second application processor group 112.

Once upgraded with the application software, the upgraded second application processor group 112 can also be activated and can be used in conjunction with the other upgraded application processor groups.

Further, in an embodiment in which the processor cluster is divided into more than two application processor groups, the rest of the application processor groups can be upgraded by the upgrading device 108 in the same manner as described above to achieve upgrading and data synchronization of all the application processors in the processor cluster.

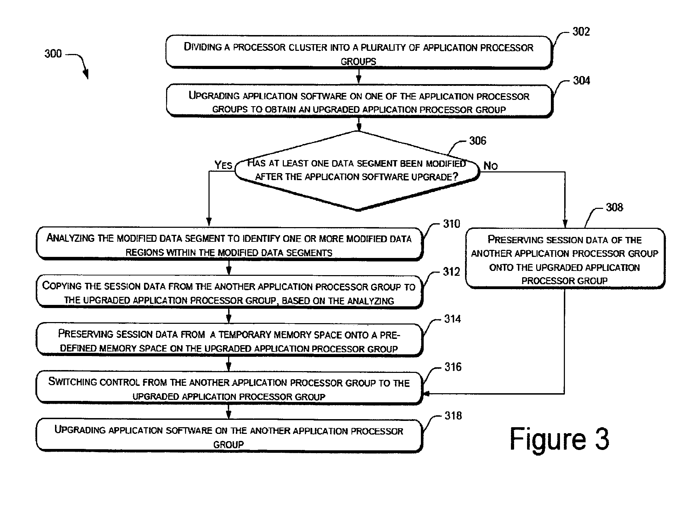

Figure 3 illustrates an exemplary method 300 for upgrading a plurality of application processors with application software in a communication network, such as the communication network 104. According to an embodiment, the method 300 is executed by an upgrading device, such as the upgrading device 108. The order in which the method is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the methods can be implemented in any suitable hardware, software, firmware, or combination thereof.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described method. The program storage devices may be, for example, digital memories, magnetic storage media such as a magnetic disks and magnetic tapes, hard drives, or optically readable digital data storage media.

At block 302, a plurality of application processors within a network entity, such as the network entity 106, are divided into a plurality of application processor groups. In an implementation, a plurality of application processors arranged in, for example, a processor cluster, are divided into a plurality of application processor groups based on numerical identifiers of the application processors or the configurations of the various application processors in the processor cluster, or a combination thereof. For example, the upgrading module 212 divides the processor cluster into a plurality of application processor groups, such as a first application processor group 110 and second application processor group 112. In said example, the first application processor group 110 may either be the active application processor group or the standby application processor group, having active application processors and standby application processors, respectively. Accordingly, if the first application processor group 110 includes the standby application processors, the second application processor group 112 includes the active application processors, and vice versa.

At block 304, the application software is upgraded on one of the plurality of application processor groups. As mentioned earlier, the application processor group having the application software installed or upgraded thereon is referred to as an upgraded application processor group. The application software may be, for example, single application software or a plurality of application software for implementing any additional functionality, a new version or release of the application software, patches, and updates. For example, the upgrading module 212 upgrades the application software on an application processor group, such as the first processor group 110, also referred to as the upgraded first application processor group 110.

At block 306, it is determined whether at least one data segment on the upgraded application processor group, such as the upgraded first processor group 110, has been modified after the application software upgrade on the upgraded first application processor group 110. In one implementation, the determination is made on the basis of previously defined files and list of data structures and/or classes of data segments that have changed in the application software. As mentioned before, the data structure of a data segment may change to reflect additional functionalities in the application software. Such determination may be made on the comparison of the data segment on the upgraded first application processor group 110 with a corresponding data segment on another application processor group, from which session data is to be copied. Such correspondence between data segments on the two application processors may be pre-defined.

If it is determined that no data segment has been modified after the application software upgrade ("No" path from block 306), the session data 218 is directly preserved from the second application processor group 112 to the corresponding data segment on the upgraded first application processor group 110 at block 308. However, if it is determined that at least one data segment has been modified ("Yes" path from block 306), the modified data segment is further analyzed at block 310.

At block 308, session data is preserved from the second application processor group onto the upgraded first application processor group. Since none of the data segments have been modified, the session data 118 can be directly copied from the second application processor group 112 to the upgraded first application processor group 110. From this block, the control transitions to block 316.

At block 310, the modified data segment is analyzed to identify one or more modified data regions within the modified data segment. In an example, one or more data regions may be identified as modified data regions within the modified data segments identified at block 306. The data regions that have been modified are different in structural format when compared to the corresponding data regions on the second application processor group 112. Whereas the structural formats of the data regions that have not been modified are in tune with the data regions on the second application processor group 112. As mentioned before, the modified data regions may include extra fields to accommodate additional functionalities in the application software upgrade.

At block 312, the data is copied from the second application processor group to the upgraded first application group based in part on the identification of the modified and the un-modified data regions at block 310. In one implementation, the data synchronization module 114 directly copies the session data 218 from data regions on the second application processor group 112, corresponding to the un-modified data regions, onto a corresponding pre-defined memory space on the upgraded first application processor group 110. However, for the modified data regions, the memory allocation module 214, in one implementation, first allocates a temporary memory space on the upgraded first application processor group 110. The temporary memory space is in tune with the size of the data region on the second application processor group 112 corresponding to the modified data region on the upgraded first application processor group 110. The data synchronization module 114 then copies the session data 218 from the second application processor group 112 onto the corresponding temporary memory space on the upgraded first application processor group 110.

At block 314, the session data within the temporary memory space is preserved in the corresponding pre-defined memory space on the upgraded first application processor group 110. In one implementation, the structural format of the session data within the data region on the second application processor group 112 corresponding to the modified data region on the upgraded first application processor group 110 is converted from an old version to a new version by copying field by field from the temporary memory space to the corresponding pre-defined memory space. During such conversion, default values may be added to accommodate any additions introduced by the application software.

At block 316, control is switched from the another application processor group to the upgraded application processor group. For example, in one implementation, after the application software is upgraded and initialized on the upgraded first application processor group 110 and the session data 218 of the second application processor group 112 is preserved, control of the second application processor group 112 is switched to the upgraded first application processor group 110. Thus, the data synchronization module 114 switches the control of the processes of the second application processor group 112 to the first application processor group 110.

With the switching of control to the upgraded first application processor group 110, the application processors in the upgraded first application processor group 110 are made operational, by running the updated version of the application software upgraded thereon. In addition, with the session data 218 of the second application processor group 112 preserved on the upgraded first application processor group 110, the application software on the upgraded first application processor group 110 begins handling one or more services handled by the second application processor group 112.

At block 318, the application software is upgraded on another application processor group. In an implementation, the application software is upgraded on the second application processor group 112 by the upgrading module 212, in the same manner as described at block 304. However, the data synchronization as performed for modified data segments and modified data regions may not be implemented for the upgraded second application processor group 112 as the session data 218 on the upgraded first application processor group 110 is already in a format that is understood by the recently upgraded second application processor group 112.

In an implementation, when all the application processor groups in the processor cluster have been upgraded with the application software then, the upgrading of the processor cluster is considered to be complete. In such a case, the communication services being handled by the plurality of application processor groups in the processor cluster can be distributed amongst the plurality of upgraded application processor groups to balance the load (not shown in the figure). Further, in an implementation, the last upgraded application processor group is configured to function in the standby mode, i.e., each application processor in the last upgraded application processor group is put in the standby mode.

It will be understood by a person skilled in the art that although the above description is provided assuming that the application processor group including the standby application processors is upgraded first, the method can be executed by beginning with the upgrading of an application processor group having active application processors.

Although implementations for upgrading of the application processors in a communication network while maintaining data synchronization have been described in language specific to structural features and/or methods, it is to be understood that the appended claims are not necessarily limited to the specific features or methods described. Rather, the specific features and methods are disclosed as exemplary implementations for upgrading of the application processors.

## Claims

1. A method for upgrading a plurality of application processor groups (110, 112) in a communication network (104) while maintaining data synchronization, the method comprising:
upgrading an application software on an application processor group (110), selected from the plurality of application processor groups (110, 112), to obtain an upgraded application processor group (110);
**characterized in that** said method further comprises:
comparing at least one data segment on the upgraded application processor group (110) with a corresponding data segment on another application processor group (112) not yet upgraded to determine whether the at least one data segment on the upgraded application processor group (110) has been modified in response to the upgrading;
identifying at least one modified data region in the at least one data segment on the upgraded application processor group (110), based in part on the comparing;
preserving session data relating to active sessions handled by the another application processor group from a data region on the another application processor group (112) to a temporary memory space within the upgraded application processor group (110), wherein the data region on the another application processor group (112) corresponds to the modified data region on the upgraded application processor group (110); and
copying the session data from the temporary memory space to a pre-defined memory space within the upgraded application processor group (110), wherein the pre-defined memory space is allocated to the modified data region.

2. The method as claimed in claim 1 further comprising dividing the plurality of application processors into the plurality of application processor groups (110, 112).

3. The method as claimed in claim 2, wherein the dividing the plurality of application processors is based at least on one of a numerical identifier associated with each of the plurality of application processors, and a configuration of each of the plurality of application processors.

4. The method as claimed in claim 3, wherein the configuration comprises one of an active configuration and a standby configuration.

5. The method as claimed in claim 1, wherein the upgrading the application software on the application processor group (110) comprises:
installing the application software on the application processor group (110); and
initializing the installed application software on the application processor group (110).

6. The method as claimed in claim 1, wherein the comparing comprises directly copying the session data from the another application processor group (112) to the upgraded application processor group (110), if the data segment on the upgraded application processor group (110) has not been modified in comparison to the corresponding data segment on the another application processor group (112).

7. The method as claimed in claim 1, wherein the identifying comprises:
further identifying at least one un-modified data region in the modified data segment; and
preserving the session data from the un-modified data region to the corresponding pre-defined memory space within the upgraded application processor group (110), wherein the pre-defined memory space is allocated to the un-modified data region.

8. The method as claimed in claim 1, wherein the copying further comprises:
switching control of at least one application process from the another application processor group (112) to the upgraded application processor group (110); and
upgrading the application software onto the another application processor group (112).

9. The method as claimed in claim 1, wherein the copying comprises field by field copying of the session data from the temporary memory space to the pre-defined memory space within the upgraded application processor group (110).

10. A device (108) for upgrading of a plurality of application processor groups (110, 112), the device (108) comprising:
a processor (202);
a memory (206) coupled to the processor (202), the memory (206) comprising, an upgrading module (212) configured to upgrade an application software on an application processor group (110) selected from the plurality of application processor groups (110, 112) to obtain an upgraded application processor group (110);
**characterized in that** said device further comprises:
a data synchronization module (114) configured to
compare at least one data segment on the upgraded application processor group (110) with a corresponding data segment on another application processor group (112) not yet upgraded to determine whether the at least one data segment on the upgraded application processor group (110) has been modified in response to the upgrade;
identify at least one modified data region in the at least one data segment on the upgraded application processor group (110), based in part on the comparing;
preserve session data relating to active sessions handled by the another application processor group from a data region on the another application processor group (112) onto a temporary memory space within the upgraded application processor group (110), wherein the data region on the another application processor group (112) corresponds to the modified data region on the upgraded application processor group (110), and a structural format of the temporary memory space is in synchronization with a structural format of the data region on the another application processor group (112); and
copy the session data from the temporary memory space onto a pre-defined memory space within the upgraded application processor group (110), wherein the pre-defined memory space is allocated to the modified data region.

11. The device (108) as claimed in claim 10, wherein the upgrading module (212) is further configured to divide a processor cluster into the plurality of application processor groups (110, 112).

12. The device (108) as claimed in claim 11, wherein the upgrading module (212) is configured to divide the processor cluster based on a configuration of each application processor in the processor cluster, wherein the configuration of each application processor comprises one of an active configuration and a standby configuration.

13. The device (108) as claimed in claim 10, wherein the data synchronization module (114) is further configured to directly copy session data from the another application processor group (112) to the upgraded application processor group (110), if the data segment on the upgraded application processor group (110) has not been modified.

14. The device (108) as claimed in claim 10, wherein the data synchronization module (114) is further configured to:
identify at least one un-modified data region in the modified data segment; and
preserve the session data from the un-modified data region to the corresponding pre-defined memory space within the upgraded application processor group (110), wherein the pre-defined memory space is allocated to the un-modified data region.

15. The device (108) as claimed in claim 10, wherein the data synchronization module (114) is further configured to:
switch control of the another application processor group (112) to the upgraded application processor group (110); and
take the another application processor group (112) offline for upgrading.

16. A computer-readable medium having embodied thereon a computer program for executing a method for upgrading a plurality of processor groups (110, 112) the method comprising:
upgrading an application software on an application processor group (110), selected from the plurality of application processor groups (110, 112), to obtain an upgraded application processor group (110); **characterized in** thtat said method further comprises
comparing at least one data segment on the upgraded application processor group (110) with a corresponding data segment on another application processor group (112) not yet upgraded to determine whether the at least one data segment on the upgraded application processor group (110) has been modified in response to the upgrading;
identifying at least one modified data region in the at least one data segment on the upgraded application processor group (110), based in part on the comparing;
preserving session data relating to active sessions handled by the another application processor group from a data region on the another application processor group (112) onto a temporary memory space within the upgraded application processor group (110), wherein the data region on the another application processor group (112) corresponds to the modified data region on the upgraded application processor group (110), and a structural format of the temporary memory space is in synchronization with a structural format of the data region on the another application processor group (112); and
copying the session data from the temporary memory space to a pre-defined memory space within the upgraded application processor group (110), wherein the pre-defined memory space is allocated to the modified data region.

17. The computer-readable medium as claimed in claim 16, wherein the determining comprises comparing the data segment on the another application processor group (112) with a corresponding data segment on the upgraded application processor group (110).

18. The computer-readable medium as claimed in claim 16, wherein the determining comprises directly copying the session data from the another application processor group (112) to the upgraded application processor group (110), if the data segment has not been modified.

19. The computer-readable medium as claimed in claim 16, wherein the copying comprises copying of the session data field by field from the temporary memory space onto a pre-defined memory space within the upgraded application processor group (110).

20. The computer-readable medium as claimed in claim 16, wherein the analyzing comprises:
further identifying at least one un-modified data region in the modified data segment; and
preserving session data from the un-modified data region to a corresponding pre-defined memory space within the upgraded application processor group (110), wherein the pre-defined memory space is allocated to the un-modified data region.

## Patentansprüche

1. Verfahren für das Upgraden einer Vielzahl von Gruppen von Anwendungsprozessoren (110, 112) in einem Kommunikationsnetzwerk (104) unter Beibehaltung der Datensynchronisation, wobei das Verfahren umfasst:
Upgraden einer Anwendungssoftware auf einer Gruppe von Anwendungsprozessoren (110), ausgewählt aus der Vielzahl von Gruppen von Anwendungsprozessoren (110, 112), zwecks Erhalt einer upgegradeten Gruppe von Anwendungsprozessoren (110);
**dadurch gekennzeichnet, dass** das besagte Verfahren weiterhin umfasst:
Vergleich von mindestens einem Datensegment auf der upgegradeten Gruppe von Anwendungsprozessoren (110) mit dem entsprechenden Datensegment auf einer weiteren, noch nicht upgegradeten Gruppe von Anwendungsprozessoren (112), um zu bestimmen, ob das mindestens eine Datensegment auf der upgegradeten Gruppe von Anwendungsprozessoren (110) in Reaktion auf das Upgraden modifiziert wurde;
Identifizieren von mindestens einer modifizierten Datenregion in dem mindestens einen Datensegment auf der upgegradeten Gruppe von Anwendungsprozessoren (110), zum Teil auf dem Vergleich basierend;
Aufbewahren von Sitzungsdaten bezüglich aktiver Sitzungen aus einer Datenregion auf der weiteren Gruppe von Anwendungsprozessoren (112), die von der weiteren Gruppe von Anwendungsprozessoren bearbeitet werden, in einem temporären Speicherplatz in der upgegradeten Gruppe von Anwendungsprozessoren (110), wobei die Datenregion auf der weiteren Gruppe von Anwendungsprozessoren (112) der modifizierten Datenregion auf der upgegradeten Gruppe von Anwendungsprozessoren (110) entspricht; und
Kopieren der Sitzungsdaten aus dem temporären Speicherplatz in einen vordefinierten Speicherplatz in der upgegradeten Gruppe von Anwendungsprozessoren (110), wobei der vordefinierte Speicherplatz der modifizierten Datenregion zugeteilt ist.

2. Verfahren nach Anspruch 1, weiterhin das Aufteilen der Vielzahl von Anwendungsprozessoren in die Vielzahl von Gruppen von Anwendungsprozessoren (110, 112) umfassend.

3. Verfahren nach Anspruch 2, wobei das Aufteilen der Vielzahl von Anwendungsprozessoren auf mindestens einer aus einer Vielzahl von nummerischen Kennungen beruht, die einem jedem aus der Vielzahl von Anwendungsprozessoren zugeordnet sind, und auf einer Konfiguration eine jeden aus der Vielzahl von Anwendungsprozessoren.

4. Verfahren nach Anspruch 3, wobei die Konfiguration entweder eine aktive Konfiguration oder eine Standby-Konfiguration umfasst.

5. Verfahren nach Anspruch 1, wobei das Upgraden der Anwendungssoftware auf der Gruppe von Anwendungsprozessoren (110) umfasst:
das Installieren der Anwendungssoftware auf der Gruppe von Anwendungsprozessoren (110); und
das Initialisieren der installierten Anwendungssoftware auf der Gruppe von Anwendungsprozessoren (110).

6. Verfahren nach Anspruch 1, wobei das Vergleichen das direkte Kopieren der Sitzungsdaten aus der weiteren Gruppe von Anwendungsprozessoren (112) in die upgegradete Gruppe von Anwendungsprozessoren (110) umfasst, wenn das Datensegment auf der upgegradeten Gruppe von Anwendungsprozessoren (110) im Vergleich mit dem entsprechenden Datensegment auf der weiteren Gruppe von Anwendungsprozessoren (112) nicht modifiziert wurde.

7. Verfahren nach Anspruch 1, wobei das Identifizieren umfasst:
weiterhin das Identifizieren von mindestens einer nicht modifizierten Datenregion in dem modifizierten Datensegment; und
das Aufbewahren der Sitzungsdaten aus der nicht modifizierten Datenregion in dem entsprechenden, vordefinierten Speicherplatz in der upgegradeten Gruppe von Anwendungsprozessoren (110), wobei der vordefinierte Speicherplatz der nicht modifizierten Datenregion zugeteilt ist.

8. Verfahren nach Anspruch 1, wobei das Kopieren weiterhin umfasst:
das Umschalten der Steuerung mindestens eines Anwendungsprozesses von der weiteren Gruppe von Anwendungsprozessoren (112) zu der upgegradeten Gruppe von Anwendungsprozessoren (110); und
das Upgraden der Anwendungssoftware auf der weiteren Gruppe von Anwendungsprozessoren (112).

9. Verfahren nach Anspruch 1, wobei das Kopieren das feldweise Kopieren der Sitzungsdaten aus dem temporären Speicherplatz in den vordefinierten Speicherplatz in der upgegradeten Gruppe von Anwendungsprozessoren (110) umfasst.

10. Vorrichtung (108) für das Upgraden einer Vielzahl von Gruppen von Anwendungsprozessoren (110, 112), wobei die Vorrichtung (108) umfasst:
einen Prozessor (202);
einen Speicher (206), gekoppelt an den Prozessor (202), wobei der Speicher (206)
ein Upgrading-Modul (212) umfasst, konfiguriert für das
Upgraden einer Anwendungssoftware auf einer Gruppe von Anwendungsprozessoren (110), ausgewählt aus der Vielzahl von Gruppen von Anwendungsprozessoren (110, 112), zwecks Erhalt einer upgegradeten Gruppe von Anwendungsprozessoren (110);
**dadurch gekennzeichnet, dass** besagte Vorrichtung weiterhin umfasst:
ein Datensynchronisierungsmodul (114), konfiguriert für
den Vergleich von mindestens einem Datensegment auf der upgegradeten Gruppe von Anwendungsprozessoren (110) mit dem entsprechenden Datensegment auf einer weiteren, noch nicht upgegradeten Gruppe von Anwendungsprozessoren (112), um zu bestimmen, ob das mindestens eine Datensegment auf der upgegradeten Gruppe von Anwendungsprozessoren (110) in Reaktion auf das Upgraden modifiziert wurde;
das Identifizieren von mindestens einer modifizierten Datenregion in dem mindestens einen Datensegment auf der upgegradeten Gruppe von Anwendungsprozessoren (110), zum Teil auf dem Vergleich basierend;
das Aufbewahren von Sitzungsdaten bezüglich aktiver Sitzungen aus einer Datenregion auf der weiteren Gruppe von Anwendungsprozessoren (112), die von der weiteren Gruppe von Anwendungsprozessoren bearbeitet werden, in einem temporären Speicherplatz in der upgegradeten Gruppe von Anwendungsprozessoren (110), wobei die Datenregion auf der weiteren Gruppe von Anwendungsprozessoren (112) der modifizierten Datenregion auf der upgegradeten Gruppe von Anwendungsprozessoren (110) entspricht und ein Strukturformat des temporären Speicherplatzes synchronisiert ist mit dem Strukturformat der Datenregion auf der weiteren Gruppe von Anwendungsprozessoren (112); und
das Kopieren der Sitzungsdaten aus dem temporären Speicherplatz in einen vordefinierten Speicherplatz in der upgegradeten Gruppe von Anwendungsprozessoren (110), wobei der vordefinierte Speicherplatz der modifizierten Datenregion zugeteilt ist.

11. Vorrichtung (108) nach Anspruch 10, wobei das Upgrading-Modul (212) weiterhin konfiguriert ist für das Aufteilen eines Prozessorenclusters in die Vielzahl von Gruppen von Anwendungsprozessoren (110, 112).

12. Vorrichtung (108) nach Anspruch 11, wobei das Upgrading-Modul (212) konfiguriert ist für das Aufteilen eines Prozessorenclusters auf der Grundlage einer Konfiguration eines jeden Anwendungsprozessors aus dem Prozessorencluster, wobei die Konfiguration eines jeden Anwendungsprozessors entweder eine aktive Konfiguration oder eine Standby-Konfiguration ist.

13. Vorrichtung (108) nach Anspruch 10, wobei das Datensynchronisierungsmodul (114) weiterhin konfiguriert ist für das direkte Kopieren von Sitzungsdaten aus der weiteren Gruppe von Anwendungsprozessoren (112) in die upgegradete Gruppe von Anwendungsprozessoren (110), wenn das Datensegment der upgegradeten Gruppe von Anwendungsprozessoren (110) nicht modifiziert wurde.

14. Vorrichtung (108) nach Anspruch 10, wobei das Datensynchronisierungsmodul (114) weiterhin konfiguriert ist für:
das Identifizieren von mindestens einer nicht modifizierten Datenregion in dem modifizierten Datensegment; und
das Aufbewahren der Sitzungsdaten aus der nicht modifizierten Datenregion in dem entsprechenden, vordefinierten Speicherplatz in der upgegradeten Gruppe von Anwendungsprozessoren (110), wobei der vordefinierte Speicherplatz der nicht modifizierten Datenregion zugeteilt ist.

15. Vorrichtung (108) nach Anspruch 10, wobei das Datensynchronisierungsmodul (114) weiterhin konfiguriert ist für:
das Umschalten der Steuerung von der weiteren Gruppe von Anwendungsprozessoren (112) zu der upgegradeten Gruppe von Anwendungsprozessoren (110); und
das Offline-Stellen der weiteren Gruppe von Anwendungsprozessoren (112), um diese upzugraden.

16. Computerlesbares Medium mit installiertem Computerprogramm für das Ausführen eines Verfahrens zum Upgraden einer Vielzahl von Gruppen von Anwendungsprozessoren (110, 112), wobei das Verfahren umfasst:
Upgraden einer Anwendungssoftware auf einer Gruppe von Anwendungsprozessoren (110), ausgewählt aus der Vielzahl von Gruppen von Anwendungsprozessoren (110, 112), zwecks Erhalt einer upgegradeten Gruppe von Anwendungsprozessoren (110);
**dadurch gekennzeichnet, dass** das Verfahren weiterhin umfasst:
Vergleich von mindestens einem Datensegment auf der upgegradeten Gruppe von Anwendungsprozessoren (110) mit dem entsprechenden Datensegment auf einer weiteren, noch nicht upgegradeten Gruppe von Anwendungsprozessoren (112), um zu bestimmen, ob das mindestens eine Datensegment auf der upgegradeten Gruppe von Anwendungsprozessoren (110) in Reaktion auf das Upgraden modifiziert wurde;
Identifizieren von mindestens einer modifizierten Datenregion in dem mindestens einen Datensegment auf der upgegradeten Gruppe von Anwendungsprozessoren (110), zum Teil auf dem Vergleich basierend;
das Aufbewahren von Sitzungsdaten bezüglich aktiver Sitzungen aus einer Datenregion auf der weiteren Gruppe von Anwendungsprozessoren (112), die von der weiteren Gruppe von Anwendungsprozessoren bearbeitet werden, in einem temporären Speicherplatz in der upgegradeten Gruppe von Anwendungsprozessoren (110), wobei die Datenregion auf der weiteren Gruppe von Anwendungsprozessoren (112) der modifizierten Datenregion auf der upgegradeten Gruppe von Anwendungsprozessoren (110) entspricht und ein Strukturformat des temporären Speicherplatzes synchronisiert ist mit dem Strukturformat der Datenregion auf der weiteren Gruppe von Anwendungsprozessoren (112); und
Kopieren der Sitzungsdaten aus dem temporären Speicherplatz in einen vordefinierten Speicherplatz in der upgegradeten Gruppe von Anwendungsprozessoren (110), wobei der vordefinierte Speicherplatz der modifizierten Datenregion zugeteilt ist.

17. Computerlesbares Medium nach Anspruch 16, wobei das Bestimmen den Vergleich der Datensegmente auf der weiteren Gruppe von Anwendungsprozessoren (112) mit einem entsprechenden Datensegment auf der upgegradeten Gruppe von Anwendungsprozessoren (110) umfasst.

18. Computerlesbares Medium nach Anspruch 16, wobei das Bestimmen das direkte Kopieren der Sitzungsdaten von der weiteren Gruppe von Anwendungsprozessoren (112) in die upgegradete Gruppe von Anwendungsprozessoren (110) umfasst, wenn das Datensegment nicht modifiziert wurde.

19. Computerlesbares Medium nach Anspruch 16, wobei das Kopieren das feldweise Kopieren der Sitzungsdaten aus dem temporären Speicherplatz in den vordefinierten Speicherplatz in der upgegradeten Gruppe von Anwendungsprozessoren (110) umfasst.

20. Computerlesbares Medium nach Anspruch 16, wobei das Analysieren umfasst:
das weitere Identifizieren von mindestens einer nicht modifizierten Datenregion in dem modifizierten Datensegment; und
das Aufbewahren von Sitzungsdaten aus der nicht modifizierten Datenregion in einem entsprechenden, vordefinierten Speicherplatz in der upgegradeten Gruppe von Anwendungsprozessoren (110), wobei der vordefinierte Speicherplatz der nicht modifizierten Datenregion zugeteilt ist.

## Revendications

1. Procédé de mise à niveau d'une pluralité de groupes de processeurs d'application (110, 112) dans un réseau de communication (104) tout en maintenant une synchronisation des données, le procédé comprenant les étapes suivantes :
mettre à niveau un logiciel d'application sur un groupe de processeurs d'application (110), choisi parmi la pluralité de groupes de processeurs d'application (110, 112), pour obtenir un groupe de processeurs d'application (110) mis à niveau ;
**caractérisé en ce que** ledit procédé comprend les étapes suivantes :
comparer au moins un segment de données sur le groupe de processeurs d'application (110) mis à niveau à un segment de données correspondant sur un autre groupe de processeurs d'application (112) non encore mis à niveau pour déterminer si ledit segment de données sur le groupe de processeurs d'application (110) mis à niveau a été modifié en réponse à la mise à niveau ;
identifier au moins une région de données modifiée dans ledit segment de données sur le groupe (110) de processeurs d'application mis à niveau, en partie sur la base de la comparaison ;
préserver les données de session relatives à des sessions actives gérées par l'autre groupe de processeurs d'application depuis une région de données de l'autre groupe de processeurs d'application (112) sur un espace mémoire temporaire dans le groupe de processeurs d'application (110) mis à niveau, la région de données sur l'autre groupe de processeurs d'application (112) correspondant à la région de données modifiée sur le groupe de processeurs d'application (110) mis à niveau ; et
copier les données de session de l'espace mémoire temporaire sur un espace mémoire prédéfini dans le groupe de processeurs d'application (110) mis à niveau, l'espace mémoire prédéfini étant alloué à la région de données modifiée.

2. Procédé selon la revendication 1, comprenant en outre la division de la pluralité de processeurs d'application en la pluralité de groupes de processeurs d'application (110, 112).

3. Procédé selon la revendication 2, dans lequel la division de la pluralité de processeurs d'application est basée au moins sur l'un d'un identifiant numérique associé à chacun de la pluralité de processeurs d'application et d'une configuration de chacun de la pluralité de processeurs d'application.

4. Procédé selon la revendication 3, dans lequel la configuration comprend l'un d'une configuration active et d'une configuration de veille.

5. Procédé selon la revendication 1, dans lequel la mise à niveau du logiciel d'application sur le groupe de processeurs d'application (110) comprend :
l'installation du logiciel d'application sur le groupe de processeurs d'application (110) ; et
l'initialisation du logiciel d'application installé sur le groupe de processeurs d'application (110).

6. Procédé selon la revendication 1, dans lequel la comparaison comprend la copie directe des données de session de l'autre groupe de processeurs d'application (112) sur le groupe de processeurs d'application (110) mis à niveau, si le segment de données sur le groupe de processeurs d'application (110) mis à niveau n'a pas été modifié par rapport au segment de données correspondant sur l'autre groupe de processeurs d'application (112).

7. Procédé selon la revendication 1, dans lequel l'identification comprend :
l'identification supplémentaire d'au moins une région de données non modifiée dans le segment de données modifié ; et
la préservation des données de session de la région de données non modifiée dans l'espace mémoire prédéfini correspondant dans le groupe de processeurs d'application (110) mis à niveau, l'espace mémoire prédéfini étant alloué à la région de données non modifiée.

8. Procédé selon la revendication 1, dans lequel la copie comprend en outre :
la commutation de la commande d'au moins un processeur d'application de l'autre groupe de processeurs d'application (112) au groupe de processeurs d'application (110) mis à niveau ; et
la mise à niveau du logiciel d'application sur l'autre groupe de processeurs d'application (112).

9. Procédé selon la revendication 1, dans lequel la copie comprend la copie champ par champ des données de session de l'espace mémoire temporaire à l'espace mémoire prédéfini dans le groupe de processeurs d'application (110) mis à niveau.

10. Dispositif (108) de mise à niveau d'une pluralité de groupes de processeurs d'application (110, 112), le dispositif (108) comprenant :
un processeur (202) ;
une mémoire (206) couplée au processeur (202), la mémoire (206) comprenant :
un module de mise à niveau (212) configuré pour
mettre à niveau un logiciel d'application sur un groupe de processeurs d'application (110) choisi parmi la pluralité de groupes de processeurs d'application (110, 112) pour obtenir un groupe de processeurs d'application (110) mis à niveau ;
**caractérisé en ce que** ledit dispositif comprend en outre :
un module de synchronisation de données (114) configuré pour
comparer au moins un segment de données sur le groupe de processeurs d'application (110) mis à niveau à un segment de données correspondant sur un autre groupe de processeurs d'application (112) non encore mis à niveau pour déterminer si ledit segment de données d'application sur le groupe de processeurs d'application (110) mis à niveau a été modifié en réponse à la mise à niveau ;
identifier au moins une région de données modifiée dans ledit segment de données sur le groupe de processeurs d'application (110) mis à niveau, en partie sur la base de la comparaison ;
préserver les données de session relatives à des sessions actives gérées par l'autre groupe de processeurs d'application depuis une région de données de l'autre groupe de processeurs d'application (112) sur un espace mémoire temporaire dans le groupe de processeurs d'application (110) mis à niveau, la région de données sur l'autre groupe de processeurs d'application (112) correspondant à la région de données modifiée sur le groupe de processeurs d'application (110) mis à niveau, et un format structurel de l'espace mémoire temporaire étant synchronisé avec un format structurel de la région de données sur l'autre groupe de processeurs d'application (112) ; et
copier les données de session de l'espace mémoire temporaire sur un espace mémoire prédéfini dans le groupe de processeurs d'application (110) mis à niveau, l'espace mémoire prédéfini étant alloué à la région de données modifiée.

11. Dispositif (108) selon la revendication 10, dans lequel le module de mise à niveau (212) est en outre configuré pour diviser un ensemble de processeurs en la pluralité de groupes de processeurs d'application (110, 112).

12. Dispositif (108) selon la revendication 11, dans lequel le module de mise à niveau (212) est configuré pour diviser l'ensemble de processeurs sur la base d'une configuration de chaque processeur d'application dans l'ensemble de processeurs, la configuration de chaque processeur d'application comprenant l'une d'une configuration active et d'une configuration de veille.

13. Dispositif (108) selon la revendication 10, dans lequel le module de synchronisation de données (114) est en outre configuré pour copier directement des données de session de l'autre groupe de processeurs d'application (112) sur le groupe de processeurs d'application (110) mis à niveau, si le segment de données sur le groupe de processeurs d'application (110) mis à niveau n'a pas été modifié.

14. Dispositif (108) selon la revendication 10, dans lequel le module de synchronisation de données (114) est en outre configuré pour :
identifier au moins une région de données non modifiée dans le segment de données modifié ; et
préserver les données de session de la région de données non modifiée dans l'espace mémoire prédéfini correspondant dans le groupe de processeurs d'application (110) mis à niveau, l'espace mémoire prédéfini étant alloué à la région de données non modifiée.

15. Dispositif (108) selon la revendication 10, dans lequel le module de synchronisation de données (114) est en outre configuré pour :
commuter la commande d'un autre groupe de processeurs d'application (112) sur le groupe de processeurs d'application (110) mis à niveau ; et
mettre l'autre groupe de processeurs d'application (112) hors ligne pour sa mise à niveau.

16. Support lisible par ordinateur comprenant intégré en son sein un programme informatique destiné à exécuter un procédé de mise à niveau d'une pluralité de groupes de processeurs d'application (110, 112), le procédé comprenant les étapes suivantes :
mettre à niveau un logiciel d'application sur un groupe de processeurs d'application (110), choisi parmi la pluralité de groupes de processeurs d'application (110, 112), pour obtenir un groupe de processeurs d'application (110) mis à niveau ;
**caractérisé en ce que** ledit procédé comprend les étapes suivantes :
comparer au moins un segment de données sur le groupe de processeurs d'application (110) mis à niveau à un segment de données correspondant sur un autre groupe de processeurs d'application (112) non encore mis à niveau pour déterminer si ledit segment de données sur le groupe de processeurs d'application (110) mis à niveau a été modifié en réponse à la mise à niveau ;
identifier au moins une région de données modifiée dans ledit segment de données sur le groupe de processeurs d'application (110) mis à niveau, en partie sur la base de la comparaison ;
préserver les données de session relatives à des sessions actives gérées par l'autre groupe de processeurs d'application depuis une région de données de l'autre groupe de processeurs d'application (112) sur un espace mémoire temporaire dans le groupe de processeurs d'application (110) mis à niveau, la région de données sur l'autre groupe de processeurs d'application (112) correspondant à la région de données modifiée sur le groupe de processeurs d'application (110) mis à niveau, et un format structurel de l'espace mémoire temporaire étant synchronisé avec un format structurel de la région de données sur l'autre groupe de processeurs d'application (112) ; et
copier les données de session de l'espace mémoire temporaire sur un espace mémoire prédéfini dans le groupe de processeurs d'application (110) mis à niveau, l'espace mémoire prédéfini étant alloué à la région de données modifiée.

17. Support lisible par ordinateur selon la revendication 16, dans lequel la détermination comprend la comparaison du segment de données de l'autre groupe de processeurs d'application (112) à un segment de données correspondant sur le groupe de processeurs d'application (110) mis à niveau.

18. Support lisible par ordinateur selon la revendication 16, dans lequel la comparaison comprend la copie directe des données de session de l'autre groupe de processeurs d'application (112) sur le groupe de processeurs d'application (110) mis à niveau, si le segment de données n'a pas été modifié.

19. Support lisible par ordinateur selon la revendication 16, dans lequel la copie comprend la copie des données de session champ par champ de l'espace mémoire temporaire sur un espace mémoire prédéfini dans le groupe de processeurs d'application (110) mis à niveau.

20. Support lisible par ordinateur selon la revendication 16, dans lequel l'analyse comprend :
l'identification supplémentaire d'au moins une région de données non modifiée dans le segment de données modifié ; et
la préservation des données de session de la région de données non modifiée sur un espace mémoire prédéfini correspondant dans le groupe de processeurs d'application (110) mis à niveau, l'espace mémoire prédéfini étant alloué à la région de données non modifiée.
